# EUROPEAN PATENT SPECIFICATION

(11) **EP 2 855 065 B1**
(45) Date of publication and mention of the grant of the patent: **05.08.2020**
(21) Application number: 13794378.3
(22) Date of filing: 27.05.2013
(51) Int. Cl.: B23K 9/095, B23K 9/32

(54) **METHOD AND ARRANGEMENT IN MANUAL WELDING**
VERFAHREN UND ANORDNUNG BEI EINEM MANUELLEN SCHWEISSVORGANG
PROCÉDÉ ET ENSEMBLE POUR SOUDAGE MANUEL

(30) Priority: 25.05.2012 FI 20125557
(43) Date of publication of application: 08.04.2015
(73) Proprietor: Kemppi Oy, 15801 Lahti (FI)
(72) Inventor: JERNSTRÖM, Petteri, FI-15520 Lahti (FI); TIILIKKA, Vesa, FI-15140 Lahti (FI); MÄKI, Markku, FI-15500 Lahti (FI); VEIKKOLAINEN, Mikko, FI-15290 Lahti (FI)
(74) Representative: Boco IP Oy Ab
(86) International application number: PCT/FI2013/050577
(87) International publication number: WO 2013/175079

(56) References cited:
- EP-A1- 2 468 443
- WO-A1-02/103567
- WO-A1-02/103567
- WO-A1-2010/142858
- FI-A- 20 095 666
- JP-A- 2002 297 707
- US-A- 5 850 066
- US-A1- 2009 234 483
- US-A1- 2009 313 549
- US-A1- 2012 145 688
- US-B1- 6 636 776
- US-B1- 7 523 069

## Description

### Background of the invention

The object of the invention is a method in manual welding according to the preamble of Claim 1.

The object of the invention is also an arrangement in manual welding according to the preamble of Claim 15.

In manual welding, i.e. welding performed by hand by the welder using a welding device, complying with the welding instruction (WPS) delivered to the welder constitutes the basis for any welding job of high quality. In the welding instruction, for every welding seam there is stated i.a. the allowed limit values for the welding current and voltage produced by the welding device, the additive material wire and shielding gas to be used in the welding job, the welding position, the welding process, and the material and material thickness of the object for welding, i.e. the work piece. A problem in manual welding is how to register compliance with the welding instruction. Erroneous welding parameter values or deficiencies in the competences of the welder in relation to the requirements defined in the welding instruction can, in performing the job, create welding faults affecting the quality of the welding seam that may remain unrecognized in subsequently performed quality check procedures. Additionally, there are problems in subsequently locating welding errors that possibly were created in the welding. In welding quality checking one generally relies on nondestructive material testing methods, such as NDT-inspections performed as spot tests of the welded seams. The presently employed quality check practice does not necessarily reveal all serious welding errors. Additionally, the information produced by prior art methods about the implementation of the manual welding is not detailed enough to be used, for example, in welding production planning.

Known in prior art is connecting a welding device to participate in an information network and transferring information between the welding device and the information network. The solutions have mainly been focused on the monitoring and control of automated welding disregarding the possible problem areas in manual welding, i.e. welding performed by hand.

Publication WO 2010/142858 A1 discloses a module for controlling a welding device graphically by means of such a set of graphs formed from the relation of an x-variable and an y-variable to be presented on a display screen as a synergistic characteristic curve characteristic of a selected welding event.

WO 2010/142858 A1 which represents the closest prior art for the method according to independent claim 1 and for the arrangement according to independent claim 15 further discloses an arrangement in manual welding, in which the welder performs a welding operation on an object to be welded using a welding device, which arrangement comprises a welding device and a data collection device in connection with the welding device, and which data collection device comprises a memory for saving information and for storing the saved information, which arrangement additionally comprises an identification individualizing the welder and at least one piece of information corresponding to the identification and a welding instruction identification for the welding operation and at least one piece of information, from the welding instruction, corresponding to the identification, means for reading identifications using the data collection device, means for fetching from the memory of the data collection device identifications and information, which correspond to the identifications, that were read,the arrangement additionally comprising means for collecting information and/or readings from the welding operation and for saving the collected information and/or readings in the memory of the data collection device along with the time of occurrence, and means for consolidating, in the data collection device, the fetched identifications and the collected information and/or readings from the welding operation for forming an information package individualizing the welding operation.

### Brief description of the invention

The objective of the invention is to solve the aforementioned problems.

The objective of the invention is achieved by means of the method according to the independent Claim 1.

Preferable embodiments of the invention are presented in the dependent patent claims.

The objective of the invention is also achieved by means of the arrangement according to the independent Claim 15.

The method according to the invention concerns manual welding, i.e. welding, wherein the welder performs a welding operation such, that the object for welding is being welded by means of a manually operated welding device. The method can be applied, for example, in gas shielded arc welding. Thus, the method according to the invention is not suited to automatic welding, as the registering of information about the welder's knowledge, such as competence information, is an essential part of the invention. In the method, a welding device is used, comprising a data collection device that can be connected to a server via an information network. The data collection device can be integrated in the welding device, or it can be a separate component connected to the welding device such, that information can be transferred between the welding device and the data collection device. An essential feature of the invention is the fact, that the data collection device has access to the server for fetching information from the server and for sending information to the server. The data collection device itself comprises a memory for saving information and for storing the saved information. Such information to be saved and stored is, for example, information fetched from the server and information gathered from the welding device.

Before starting a welding operation, an identification personalizing the welder is being arranged for the welder along with information corresponding to the identification. Thus, an identity card, for example, or some similar device has been created for the welder, in which device the identification, such as a bar code, is arranged, and the welder is identified by means of this bar code or other identification. Corresponding to this identification an appropriate amount of information has been arranged, such as the personal data of the welder, information about competence grades achieved by the welder and about their validity. The identification and the information corresponding to the identification are saved in the server, from which server they can be fetched and saved in the data collection device. Before starting the actual welding, the welder's identification is read using the data collection device, which data collection device either performs the fetching from the server, via the information network, of the identification and the information corresponding to the identification and saves them in the memory of the data collection device or, alternatively, fetches the identification corresponding to the welder's identification, that was read, and the information corresponding to the identification from information, that already earlier has been fetched from the server and saved in the data collection device. The aforementioned chain of events is also performed for the welding instruction, i.e. a welding instruction identification and information from the welding instruction corresponding to the identification are arranged for the welding operation, which identification and information are saved in the server, and from which server they can be fetched and saved in the data collection device. The information corresponding to the identification can be in a form displayable as such, such as the number of the welding instruction or, correspondingly, the information corresponding to the identification can be in the form of a symbol sequence of a bar code, such as the additive material to be used. Then, the symbol sequence as such can be compared to a symbol sequence of a bar code read at the object to be welded, and compliance with the welding instruction regarding the choice of additive material to be used can be ascertained.

The welding instruction identification is read using the data collection device, and the identification and the information corresponding to the identification are fetched from the server via the information network, and they are saved in the memory of the data collection device, or, alternatively, the identification and the information corresponding to the welding instruction identification that was read are fetched from information already fetched from the server and saved in the data collection device. During the welding operation, the data collection device is in contact with the welding device such, that the data collection device gathers information and/or readings about the welding operation from the welding device and saves the information and/or readings, that it has gathered, in its memory such, that each piece of information and/or reading about the welding operation is saved in the memory along with the time of the occurrence. In other words, each piece of information and/or reading about the welding operation is provided with a time stamp, from which one can find out just when any piece of information and/or reading, associated with the welding operation, occurred in the welding operation. Correspondingly, all the identifications being read are given a time stamp, and the identifications are assumed to be valid for the duration of the welding operation or several consecutive welding operations, until a new substituting identification is read.

In a method according to the invention, bar codes or other similar identifications are read by means of the data collection device in connection with a welding job, which data collection device, from its memory or from the server, fetches the information associated with the identification, such as the personal data of the welder, individualization information of the object to be welded, i.e. the work piece, the welding instruction and the additive material. As the available identifications and the information corresponding to them have been arranged in advance in the server and consequently are available to the data collection device, the user, after the reading of each identification, can be assured, that the identification, that was read, is known, i.e. it exists and that it is appropriate for the welding operation in question. A significant advantage is gained in this, since it is ascertained that at least the welder and the welding instruction surely are being individualized in the welding operation in question. When the identification is a bar code, the bar code reader converts the bar code into a symbol sequence according to prior art. The bar codes in symbol sequence form are transferred from the server to the data collection device should correspond to the read bar code converted into a symbol sequence. In reading additive materials or shielding gas, the data collection device checks both the existence of the identifications and the correspondence to identifications in the information in the welding instruction. The order can vary, of course, and then the information corresponding to the welding instruction identification, that was read, is compared with already read shielding gas identifications and additive material identifications.

Compliance with the welding instruction regarding the competence of the welder is checked by comparing the information in the welding instruction, such as position and material thickness, with the welder competence information. This information is typically not composed as identifications, i.e. for example as bar code symbol sequences, but as text data. The data collection device is informed in advance about the rules for how the welder's competences can be compared with the information described by the welding instruction. By means of the identifications and the information associated with the identifications, exact and timely documentation required by the quality system or quality checking can be composed together with the information collected about the welding operation.

In a typical welding operation, a set of identifications and information associated with the identifications are input in advance in the server, and the identifications together with their information is copied into the data collection device. The identifications are typically specific for a work location/factory/welding shop, and they contain a bar code or other corresponding identification that can be converted to a symbol sequence, and as information at least a plain language explanatory name is attached to the identification. For example, a bar code on each welder's pass is associated with the name of the welder. Other information is further associated with the identifications, such as the welder's competence classifications, competence validity times and other similar information. Thus, the identification is a unique individual numerical sequence for an item, such as a welder, a welding instruction, an object to be welded or other similar part of a welding operation, and the information typically comprises the name of the item and/or other information about the item. Only an appropriate set of identifications and information are being maintained in the data collection device. The identification is preferably a bar code, an RFID-identification, a piece of information produced by a sensor, or something similar.

Thus, the object of the invention is a method in manual welding, wherein the welder performs a welding operation on an object to be welded using a welding device, wherein in the method a welding device is used, which comprises an data collection device, which via an information network can be connected to a server for fetching and sending information, and which data collection device comprises a memory for saving information and for storing the saved information, the method comprising steps, in which, before starting the welding operation, an identification individualizing the welder and at least one piece of information corresponding to the identification are arranged, which identification and information are saved in the server, and from which server they can be fetched and saved in the data collection device, the welder's identification is read using the data collection device, the identification and the at least one piece of information corresponding to the identification are fetched via the information network from the server and they are saved in the memory of the data collection device or, alternatively, the identification corresponding to the welder's identification, that was read, and the information corresponding to the identification are fetched from information, which already earlier has been fetched from the server and saved in the data collection device, and a welding instruction identification for the welding operation and at least one corresponding piece of information from the welding instruction corresponding to the identification are arranged, which identification and information are saved in the server, and from which server they can be fetched and saved in the data collection device, the welding instruction identification is read using the data collection device, the identification and at least one piece of information corresponding to the identification are fetched from the server via the information network and they are saved in the memory of the data collection device, or, alternatively, the identification corresponding to the welding instruction identification, that was read, and the at least one piece of information corresponding to the identification are fetched from information already fetched from the server and saved in the data collection device, and in which method, during the welding operation, the data collection device gathers information and/or readings concerning the welding operation from the welding device and saves the information and/or readings concerning the welding operation, that it has collected, along with the time of occurrence associated with them, in the memory, and which method comprises a step of information consolidation, in which the identifications fetched prior to starting the welding operation and the information and/or readings concerning the welding operation, that were collected and saved during the welding operation are consolidated such, that they form an information package individualizing the welding operation.

The object of the invention is also an arrangement in manual welding, wherein the welder performs a welding operation on an object to be welded using a welding device, which arrangement comprises a welding device and a data collection device in connection with the welding device, which data collection device via an information network can be connected to a server for fetching and sending information, and which data collection device comprises a memory for saving information and for storing the saved information, which arrangement additionally comprises an identification individualizing the welder and at least one piece of information corresponding to the identification and a welding instruction identification for the welding operation and at least one piece of information from the welding instruction corresponding to the identification, which identifications and information can be saved in the server such that the identifications and the information can be fetched from the server and can be saved in the memory of the data collection device, means for reading the identifications using the data collection device, means for fetching the identifications and the information corresponding to the identifications, that were read, from the memory of the data collection device and/or from the server, the arrangement additionally comprising means for collecting information and/or readings about the welding operation and for saving the collected information and/or readings in the memory of the data collection device along with the time of occurrence, and means for consolidating the identifications, that were fetched, and the collected information and/or readings about the welding operation in the data collection device for forming an information package individualizing the welding operation.

By means of the method according to the invention, it is possible to comprehensively control the progress of the welding in accordance with the instructions and the adequacy of the welders' competences in relation to the welding instruction. In welding according to the method, deviations can be reported automatically by comparing the identifications, that were read, and/or the information they contain, to each other and/or by comparing them with information gathered from the welding device. Typical deviations are a deviation in the welding current and voltage from the limits allowed in the welding instruction, insufficient welder competence in view of the level required for the object to be welded concerning, for example, the position, and the selected shielding gas in view of the choice of shielding gas demanded in the welding instruction. The identifications, which preferably are bar coded, can be read into the data collection device and be transferred to the server, whereupon they automatically are transferred to become part of the quality check documentation of the welding job. Such identifications are associated with, for example, the welder, the welding instruction, and the additive materials. In case an identification is associated also with the object to be welded, i.e. the work item, any spots in the work pieces having welding faults can be indicated with an accuracy of a single weld, based on the parameters of the welding device gathered during the welding job and on the identifications, that were read, and the information corresponding to them. In prior art, it has not been possible automatically to exactly report possibly faulty spots, that should be subject to additional checking for ensuring the quality, for example the welding current overshooting the limit values in the welding instruction in a certain work piece, in a certain weld, at a certain point in time by a certain welder.

By means of one preferable embodiment of the method according to the invention the advantage is achieved, that manually performed welding can be comprehensively controlled, and subsequently it can be verified whether each individual weld has been made according to the welding instructions and whether the welders' competences have been sufficient and up to date at the time the weld was made.

Additionally, by means of one preferable embodiment of the method according to the invention, the advantage is achieved that, based on the collected identifications and the information corresponding to the identifications as well as the information gathered about the welding operation, possible serious welding fault spots and their position in the welding job can be deduced mathematically or on the basis of a model based on experience.

### List of figures

Next, some preferable embodiments of the invention will be presented in greater detail with reference to the attached figures, of which
Figure 1 shows a typical welding device to be used in the method according to the invention, and
Figure 2 shows a data collection device typically to be used in the method according to the invention.

### Detailed description of the invention

The welder starts a job by staring up the welding device, in connection with which the data collection device connected to the welding device automatically accesses the server and updates the available identifications and the appropriate information corresponding to them. Appropriate information means, that not necessarily all the information corresponding to the identifications will be updated from the server to the data collection device, but rather those needed in the actual welding operation, while other information is stored in the server, e.g. for other reporting. It is also possible that all the information corresponding to the identifications is updated from the server to the data collection device. In order to individualize the welding device, the data collection device fetches information about the welding device from the welding device to be used, such as its serial number. Using the data collection device, the welder reads off his personal card an identification, which can be a bar code, i.e. the welder identifies himself as the user of the welding device. The information corresponding to the welder's identification preferably comprises information about the identity of the welder and/or information about the welder's competence. Typically, the data collection device greets the user by name, for example by means of a text appearing on a display screen of the data collection device, whereby the welder will know that the reading of the identification was successful in a manner appropriate in view of the method. The welder's competence information preferably comprise information about at least one of the following: the welding process, base material group, type of welding, product shape, welding position, material thickness and/or time of validity of the competence. Thus, the competence information convey, for example, for what welding process the welder has gained competence or what welding processes he is allowed to perform. The welder, using the data collection device, reads the identifications off the welding instruction that he has in his possession, which as a paper document. Typically, the welding instruction is presented to the welder via the display of the data collection device, as a name in plain language or a number, so that the welder can verify that he possesses the proper documents. Next, using the data collection device, the welder reads the bar code of the additive material wires in use and the bar code of the shielding gas. The data collection device checks whether, for each identification that is being read, a corresponding identification and at least one piece of information contained within it, is found in the memory of the data collection device. If the identification read by means of the data collection device is unknown or it cannot be found in the memory of the data collection device, the data collection device makes a data communication connection to the server and requests updated identifications. If the identification having been read is known, i.e. it is found in the memory of the data collection device, the data collection device returns at least one piece of information associated with the identification as an acknowledgement to the user. In other words, the method comprises a step, wherein subsequent to reading an identification and performing the fetching, the data collection device returns to the welder, via the data collection device, at least one piece of information corresponding to the identification that was read, as an indication of the fact, that the identification arranged at the server and the information corresponding to the identification are available to the data collection device. An error message is issued to the user via the data collection device when the identification remains unknown. The data collection device checks that the identifications of additive material wire and gas mixture that were read and/or the information associated with the identifications are the same as the identifications and/or the information associated with the identifications presupposed in the welding instruction. The automatic checking of the identifications produces some considerable advantage in the quality monitoring of manual welding, in which selecting the correct welding instruction and materials previously has been solely the responsibility of the welder and thus subject to human mistakes. Verifying the identifications produces some considerable advantage compared to the present practice, since it reduces the probability of unknown notations being included in a subsequently performed reporting step. Preferably, the server and/or the data collection device produces for the welder and/or to a remote device, such as a computer, information about the result from comparing the information corresponding to the welder's identification, such as competence information, and the information corresponding to the welding instruction identification for the welding operation, such as the competence requirements in the welding instruction. According to a preferable embodiment, the server comprises a reporting function arranged to produce reports for reporting via the information network to the data collection device and/or to a remote device, such as a computer, the identifications associated with a welding operation information and the information corresponding to the identifications and/or the information and/or readings from the welding operation. The reporting function preferably comprises a computational model for controlling the welding production.

The welder adjusts suitable welding values in the welding device and welding can begin. During welding, the data collection device monitors the welding device and gathers data essential in view of the reporting, such as the welding process in use, welding starting information, welding finishing information, electrical parameters, such as currents, voltages, and/or mechanical parameters, such as the wire feed speed. The data collection can occur with a sampling rate of e.g. 100 ms regarding the variable electrical and mechanical parameters. The data collection device typically does not measure the values itself, but takes readings of the data communications and the values of parameter tables of the welding device. If necessary, sensors can be arranged in connection with the data collection device for measuring data, if they are otherwise unavailable in the welding device. Sensors typically used in gas shielded arc welding are a sensor for the gas flow and a sensor for the welding arc, by means of which starting and finishing of the welding are being measured. When the welding is finished, the data collection device compiles an information package for the each weld, i.e. the time stamped information and parameters for the operation between starting and finishing of the welding, and attaches to it the identifications that were read, such as the welder, the work piece, the work instruction, etc. In gas shielded arc welding, the welding method preferably comprises the weld created between the starting and the finishing of the welding. The welding seam typically comprises one or more welds. The welding operation can be interrupted, when the welder needs a rest or for a time during which settings of the welding device are being fine adjusted. The welding seam can also be formed out of several welds on top of each other, such as occurs in welding a sealing run. Then, the identifications are not read at the start of every welding operation, but the identifications having been read will stay valid until they are replaced by a new one or until the welding device is switched off or restarted. Thus, the information packages for each weld contain the identifications being valid at the point in time in question. The information packages for each weld are sent to the server for reporting. Preferably, the data collection device performs the information consolidation step and sends the information package to the server via the data network. In its simplest form, the extended reporting can comprise a list of received information packages for each weld including their values, i.e. in other words the information corresponding to the identifications and the information and/or readings from the time of the welding operation. A better usability is provided by a user interface created for the reporting, such as the WEB user interface, in which different types of data are reported in separate information blocks. Typically, the blocks are listings of deviations from the welding current values of the welding instruction, deviations in the competences of the welder, and summaries of the object to be welded, i.e. for each work piece. Compliance with the welding instruction requires a certain competence of the welder. Whether the competence of the welder is sufficient is calculated preferably taking into account five sub-items in which the information associated with the welder should correspond to the level required in the welding instruction. Sub-items are the welding process, the group of additive materials, the type of weld, the shape of the product, the position of the welding, the material thickness and the time of validity of the competence. In case a welder possesses several competences in one sub-item, at least one competence must fully correspond to the requirements in the welding instruction in order to avoid a competence discrepancy. Of the sub-items, the welding process and the validity of the competence must, as such, correspond to the welding process presupposed in the welding instruction and to the time of the welding operation. Regarding other sub-items, the correspondence between the competence range of the welder and the requirements presented in the welding job instruction has been arranged in table form in a manner appropriate for each sub-item. In the tables, dependencies between the various sub-items, e.g. the impact of the type of welding on the welding position competence ranges. The material thickness competence ranges are arranged in table form taking into account butt welding, fillet welding, and pipe welding.

Thus, the method additionally comprises a step, wherein an identification and information corresponding to the identification are arranged for the additive material and/or shielding gas to be used in the welding operation, which identification and information are saved in the server and from which server they can be fetched to and saved in the data collection device, the identification for the additive material and/or the shielding gas is read using the data collection device, the identification and at least one piece of information corresponding to the identification are fetched from the server via the data network and they are saved in the memory of the data collection device or, alternatively, the identification corresponding to the identification for the additive material and/or the shielding gas and at least one piece of information corresponding to the identification that was read is fetched from information already fetched from the server and saved in the data collection device, information about the additive material and/or shielding gas presupposed in the welding instruction is arranged into the information corresponding to the welding instruction identification, the additive material and/or shielding gas identification read in the data collection device and/or server is compared to the information corresponding to the welding instruction identification and using the data collection device a warning is issued to the welder, if the additive material and/or shielding gas identification that was read does not correspond to the information about the additive material and/or shielding gas identification presupposed in the welding instruction that is arranged in the welding instruction identification.

Said aforementioned chain of events is also performed to the object to be welded and to the welding instruction such that an identification individualizing the object to be welded associated with the welding operation and at least one piece of information corresponding to the identification are arranged. In other words, for the object to be welded, a bar code, for example, is created and information about the object to be welded is associated to the bar code. This identification and the information associated with it are saved in the server, and from which server they can be fetched and saved in the data collection device. Before starting the welding, the identification for the object to be welded is read using the data collection device, which data collection device fetches the identification and the at least one piece of information corresponding to the identification via the data network from the server and saves them in the memory of the data collection device or, alternatively, fetches from information already earlier fetched from the server and saved in the data collection device, the identification and information corresponding to the identification of the object to be welded, that was read. After the welding operation, the information about the welding instruction, such as the current and/or voltage limit values defined in the welding instruction, corresponding to the welding instruction identification that was read, is compared with the welding operation information and/or readings gathered from the welding device such that occurred deviations in the welding operation in relation to the welding instruction will be found. By comparing the point in time of the deviation that was found, with the identification for the object to be welded valid at the that same instance and with other points in time of welding during the period of validity of the identification for the object to be welded, a possible fault spot can be identified in the work piece, i.e. the object that was welded. Preferably, the deviation is an overshoot of the welding voltage and the welding current in relation to the values allowed in the welding instruction. Preferably, the information and/or readings of the welding operation comprise at least one of the following: information about the welding process, starting information of the welding operation, finishing information of the welding operation, the flow of shielding gas, the welding voltage, the wire feed speed or the current of the motor feeding the wire.

Based on the collected information, also the arc times and idle times of the welding can be reported, which times are utilized in production development. Then, for example skill deficiencies, performance speeds and error frequencies for each welder can be taken into account in the production control, and they can be consolidated from the collected information and be utilized in the planning of the welding production.

The reporting can be arranged, in the manner described above, mainly after completion of the welding job, but the invention enables real time reporting during welding equally well, whereby the welder and the welding device can be controlled in real time based on the reporting. Reporting in this connection should be understood as the processing of the identification information that was read and the information and/or readings from the welding operation that were collected, based on either a mathematical formula, a model based on experience, or logic input in advance, The result can be a listing of registered phenomena, predefined alarms, error messages, guiding values for planning the welding production, or actual control commands for the welding production or the welding device, The data processing is performed partly or totally in the data collection device and, if need be, in the server.

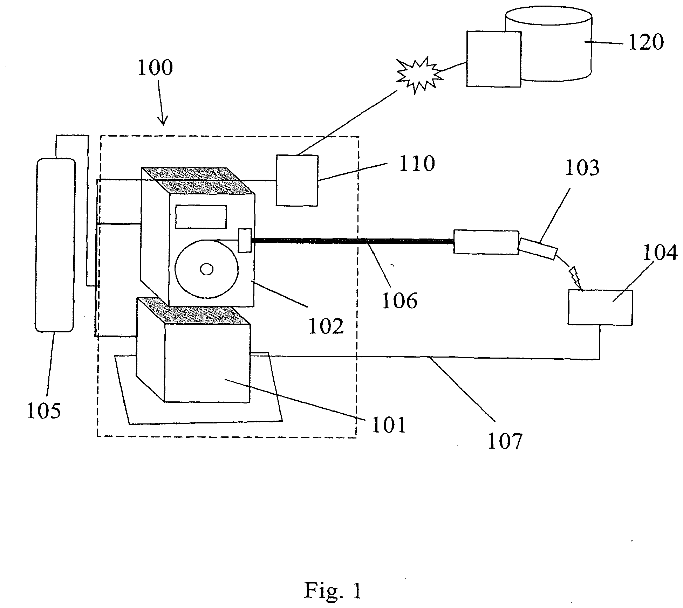

In Figure 1, a welding device 100 is presented, showing a typical MIG/MAG welding device. In the figure, the number 101 indicates a power source component having the function of feeding desired welding power via the wire feeding apparatus 102 and the cabling 106 to the welding gun 103. The number 105 indicates a shielding gas container. The mechanism of the wire feed apparatus 102 feeds spooled additive material wire to the welding gun 103 at a regulated speed. From the work piece, i.e. the object to be welded 104, an earth cable 107 is leading back to the welding device 100 in order to create a closed welding current circuit. In the welding gun 103, the welding current coming from the current conductor is transferred to the additive material wire, and then a welding arc is formed between the end of the additive material wire protruding out of the welding gun 103 and the work piece 104. A data collection device 110 is attached in connection with the welding device 100. The data collection device 110 is typically a connectable additional feature module including a display, but it may also be integrated in the welding device 100. The data collection device 110 is attached to the welding device 100 such that it is able to monitor the workings of the welding device 100 in connection with, for example, a CAN bus and to collect, into its own memory, information about the welding device. A data communication connection to an information network containing a server 120 is arranged in the data collection device 110. The information network can be any known data transmission network, wired or wireless. According to a preferable embodiment, the data collection device 110 contains a mass memory into which the intention is to save typically used identifications and information and to collect information and readings for each welding operation, for example for a period of several months. On account of the memory, there need not be a real time connection to the server 120, and the data collection device 110 can function independently for long periods of time. The data collection device 110 accesses the server 120 when necessary either for updating identifications and information or for unloading collected information. The server 120 is typically an HTML-server, whereby the data collection device 110 functions in the role of client. In the server 120, identifications used in each factory or company are arranged, which identifications individualize available objects to be welded 104, welding instructions, welders, shielding gases in use, additive materials, and other similar items. For each item, a bar code or other similar identification is created, by which the item is identified. Information associated with each of the identifications is input in the server 120, which information is saved in the server 120. Information and identifications are maintained up to date in the server 120. For example, valid welding competence information for each welder, such as allowed welding processes and competence ranges for the welding position or material thicknesses and their validity information, is input in the server 120, which information is associated to the identifier individualizing the welder. Correspondingly, the information contained in the welding instruction is input in the server 120, such as the allowed welding current limits, the required welding process, the required additive material wires and shielding gas mixtures, the material thickness and the welding position, which are associated to the identification individualizing the welding instruction. The data for the identifiers and the information corresponding to them can be input using a user interface created for that purpose, such as the WEB user interface, or the data can be loaded directly from the an existing information system. The identification and the information corresponding to it can be located in a data storage device separate from the server 120, to which storage device the server 120 has access. The data collection device 110 fetches from the server the identifications and an appropriate amount of information associated with the identifications that have been arranged there, and saves them in its own memory. In case the main portion of the quality check reporting is done on the server, nothing but just that information associated with an identification that one wishes to process directly in connection with the welding operation needs to be transferred to the data collection device.

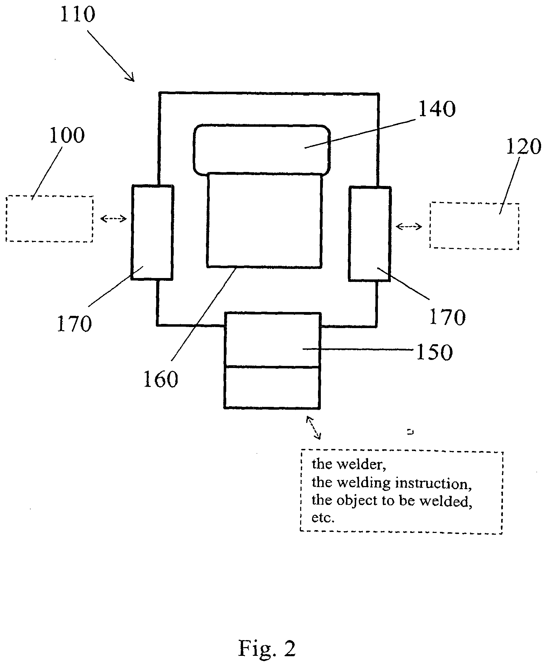

Figure 2 shows a schematic picture of a data collection device 110. The data collection device typically comprises a display 140, a component for reading identifications 150, such as a bar code reader, a processor and a mass memory 160, and data communication means 170 for establishing a connection to the server 120 as well as to the welding device 100. The data collection device 110 can be integrated inside the welding device 100 such that the user interface of the welding device 100 also acts as the user interface for the data collection device 110. The memory can also be shared with the welding device 100.

To a person skilled in the art, it is evident that, along with developments in the technology, the basic idea of the invention can be implemented in many different ways. Thus, the invention and its embodiments are not restricted to the examples described above, but rather, they can vary within the scope of the patent claims.

## Claims

1. A method in manual welding, in which a welder performs a welding operation using a welding device (100) on an object to be welded (104), in which method a welding device (100) comprising a data collection device (110) is being used, the data collection device (100) being connectable via a data network to a server (120) for fetching and sending information, and which data collection device (110) comprises a display (140), a component for reading identifications (150), a processor, a mass memory (160) for saving information and for storing the saved information, and data communication means (170) which establishes a connection to the server (120) as well as to the welding device (100), the method comprising steps, in which before starting a welding operation
- a welder identification individualizing the welder and at least one piece of information corresponding to the identification are arranged, which identification and information are saved into the server, and from which server they can be fetched and saved into the data collection device (110), the information corresponding to the welder identification comprises information about competence grades achieved by the welder, the welder identification is read from a bar code, an RFID-identification or a piece of information produced by a sensor using the data collection device (110), the welder identification and at least one piece of information corresponding to the welder identification are fetched via the data network from the server (120) and they are saved in the memory of the data collection device (110) or, alternatively, the identification corresponding to the welder identification, that was read, and at least one piece of information corresponding to the welder identification are fetched from information already fetched from the server (120) and saved in the data collection device (110),
- an object identification individualizing the object to be welded associated with the welding operation and at least one piece of information corresponding to the object identification are arranged, which object identification and information are saved into the server, and from which server they can be fetched and saved into the data collection device (110), the object identification for the object to be welded is read from a bar code, an RFID-identification or a piece of information produced by a sensor using the data collection device (110), the object identification and at least one piece of information corresponding to the identification are fetched via the data network from the server (120) and they are saved in the memory of the data collection device (110) or, alternatively, the object identification corresponding to the identification for the object to be welded, that was read, and at least one piece of information corresponding to the object identification are fetched from information already fetched from the server (120) and saved in the data collection device (110), and
- a welding instruction identification for the welding operation and at least one piece of information corresponding to the welding instruction identification are arranged, which welding instruction identification and information are saved into the server, and from which server they can be fetched and saved into the data collection device (110), the welding instruction identification is read from a bar code, an RFID-identification or a piece of information produced by a sensor using the data collection device (110), the welding instruction identification and at least one piece of information corresponding to the welding instruction identification are fetched via the data network from the server (120) and they are saved in the memory of the data collection device (110) or, alternatively, the welding instruction identification corresponding to the welding instruction identification, that was read, and at least one piece of information corresponding to the welding instruction identification are fetched from information already fetched from the server (120) and saved in the data collection device (110), and
- checking compliance with the welding instruction regarding the competence of the welder by comparing the information corresponding to the welder identification, comprising information about competence grades achieved by the welder, with the information corresponding to the welding instruction identification such as position and material thickness, and
in which method the data collection device (110) during the welding operation
- collects information and/or readings of the welding operation from the welding device (100), and
- saves in its memory the information and/or readings of the welding operation that it has collected along with the point in time of occurrence associated with them, and
which method comprises an information consolidation step, in which the identifications fetched before starting the welding operation and the information and/or readings of the welding operation, that were collected and saved, are combined such that they form an information package individualizing the welding operation, such that at least the welder and the welding instructions surely are individualized in the welding operation,
which method further comprises a documentation composing step, in which exact and timely documentation required by the quality system or quality checking is composed together with the information collected about the welding operation.

2. The method according to Claim 1, **characterized in, that** the welding operation in shielding gas arc welding comprises the weld formed between the starting of the welding and the finishing of the welding.

3. The method according Claim 1 or 2, **characterized in, that** the method comprises a step, in which the data collection device (110) after having read and fetched the identification, via the data collection device (110) returns to the welder the at least one piece of information corresponding to the identification, that was read, as an indication of the fact that the identification and the information corresponding to the identification that were arranged in the server are available to the data collection device.

4. The method according to any one of the preceding claims, **characterized in, that** the data collection device (110) performs the information consolidation step and sends the information package via the data network to the server (120).

5. The method according to any one of the preceding claims, **characterized in, that** the method additionally comprises a step, in which
- an identification of for the additive material and/or shielding gas to be used in the welding operation and at least one piece of information corresponding to the identification are arranged, which identification and information are saved into the server, and from which server they can be fetched and saved into the data collection device (110),
- the identification of the additive material and/or shielding gas is read using the data collection device (110),
- the identification of the additive material and/or shielding gas and at least one piece of information corresponding to the identification of the additive material and/or shielding gas are fetched via the data network from the server (120) and they are saved in the memory of the data collection device (110) or, alternatively, the identification of the additive material and/or shielding gas corresponding to the identification of for the additive material and/or shielding gas, that was read, and at least one piece of information corresponding to the identification of the additive material and/or shielding gas are fetched from information already fetched from the server (120) and saved in the data collection device (110),
- the information about the additive material and/or shielding gas presupposed in the welding instruction is arranged into the information corresponding to the welding instruction identification,
- the identification of for the additive material and/or shielding gas having been read in the data collection device (110) and/or the server (120) is compared with the information corresponding to the welding instruction identification, and
- a warning is issued to the welder by means of the data collection device(110), if the identification of for- the additive material and/or shielding gas having been read does not correspond to the information arranged in the welding instruction identification concerning the identification of for- the additive material and/or shielding gas presupposed in the welding instruction.

6. The method according to any one of the preceding claims, **characterized in, that** the information and/or readings of the welding operation comprise at least one of the following: information about the welding process, information about starting the welding operation, information about finishing the welding operation, the shielding gas flow, the welding current, the wire feed speed or the current of the motor feeding the wire.

7. The method according to any one of the preceding claims, **characterized in, that** the information corresponding to the welder identification comprises information about the welder's identity and/or the welder's competence information.

8. The method according to Claim 7, **characterized in, that** the welder's competence information comprises information about at least one of the following: the welding process, the base material group, the welding category, the form of the product, the welding position, the material thickness, and/or the competence validity time.

9. The method according to any one of the preceding claims, **characterized in, that** the server (120) and/or the data collection device (110) produces the information to the welder and/or a remote device, such as a computer, about the result of comparing the information corresponding to the welder identification, such as the competence information, with the information corresponding to the welding instruction identification of the welding operation, such as the competence requirements in the welding instruction.

10. The method according to any one of the preceding claims, **characterized in, that** the server (120) comprises a reporting function, which is arranged to produce reports for the reporting of identifications associated with a welding operation and of information corresponding to the identifications and/or information and/or readings from the welding operation via the data network to the data collection device (110) and/or to a remote device, such as a computer.

11. The method according to Claim 10, **characterized in, that** the reporting function comprises a computational model for controlling the welding production.

12. The method according to any one of the preceding claims, **characterized in, that** the method additionally comprises a step, in which method, for finding a deviation in the welding operation, the information from the welding instruction, that was read after the welding operation, such as the limit values for the current and/or the voltage defined in the welding instruction, corresponding to the welding instruction identification, is compared with the information and/or readings of the welding operation collected from the welding device (100).

13. The method according to Claim 12 **characterized in, that** the deviation is an overshoot of the welding voltage and the welding current in relation to the values allowed by the welding instruction.

14. An arrangement in manual welding, in which the welder performs a welding operation on an object to be welded (104) using a welding device (100), which arrangement comprises
a welding device (100) and a data collection device (110) in connection with the welding device (100), which data collection device (110) is connected via a data network to a server (120) for fetching and sending information, and
which data collection device (110) comprises a display (140), a component for reading identifications (150), a processor, a mass memory (160) for saving information and for storing the saved information and data communication means (170) for establishing a connection to the server (120) as well as to the welding device (100),
which arrangement is configured to
an identification individualizing the welder and at least one piece of information corresponding to the identification and comprising information about competence grades achieved by the welder, an identification for the object to be welded and at least one piece of information corresponding to the identification for the object to be welded, and a welding instruction identification for the welding operation and at least one piece of information, from the welding instruction, corresponding to the identification, which identifications and information are saved in the server (120) such, that the identifications and the information are fetched from the server (120) and saved in the memory of the data collection device (110), which arrangement additionally comprises means for reading identifications from a bar code, an RFID-identification or a piece of information produced by a sensor using the data collection device (110),
means for fetching from the memory of the data collection device and/or from the server (120), identifications and information, which correspond to the identifications, that were read,
means for comparing the information corresponding to the welder identification, comprising information about competence grades achieved by the welder, with the information corresponding to the welding instruction identification such as position and material thickness,
the arrangement additionally comprising means for collecting information and/or readings from the welding operation and for saving the collected information and/or readings in the memory of the data collection device (110) along with the time of occurrence,
means for consolidating, in the data collection device (110), the fetched identifications and the collected information and/or readings from the welding operation for forming an information package individualizing the welding operation, such that at least the welder and the welding instructions surely are individualized in the welding operation, and
means for composing exact and timely documentation required by the quality system or quality checking together with the information collected about the welding operation.

## Patentansprüche

1. Verfahren beim manuellen Schweißen, in dem ein Schweißer mit Hilfe einer Schweißvorrichtung (100) an einem zu schweißenden Objekt (104) einen Schweißvorgang ausführt, wobei in dem Verfahren eine Schweißvorrichtung (100), die eine Datensammelvorrichtung (110) umfasst, verwendet wird, wobei die Datensammelvorrichtung (100) zum Abrufen und Senden von Informationen über ein Datennetz mit einem Server (120) verbunden werden kann und wobei die Datensammelvorrichtung (110) ein Display (140), ein Bauteil zum Auslesen von Kennungen (150), einen Prozessor, einen Massenspeicher (160) zum Speichern von Informationen und zum Ablegen der gespeicherten Informationen und ein Datenkommunikationsmittel (170), das eine Verbindung zum Server (120) sowie zur Schweißvorrichtung (100) herstellt, umfasst, wobei das Verfahren Schritte umfasst, in denen vor dem Start eines Schweißvorgangs
- eine den Schweißer individualisierende Schweißer-Kennung und mindestens eine der Kennung entsprechende Information eingerichtet werden, wobei die Kennung und die Information auf dem Server gespeichert werden und sie aus dem Server abgerufen und in der Datensammelvorrichtung (110) gespeichert werden können,
die der Schweißer-Kennung entsprechende Information eine Information über die vom Schweißer erreichten Qualifikationsgrade umfasst,
die Schweißer-Kennung aus einem Strichcode, einer RFID-Kennung oder einer von einem Sensor erzeugten Information mit Hilfe der Datensammelvorrichtung (110) ausgelesen wird,
die Schweißer-Kennung und mindestens eine der Schweißer-Kennung entsprechende Information über das Datennetz aus dem Server (120) abgerufen werden und sie im Speicher der Datensammelvorrichtung (110) gespeichert werden oder, alternativ, die Kennung, die der Schweißer-Kennung entspricht, die ausgelesen wurde, und mindestens eine der Schweißer-Kennung entsprechende Information aus Informationen abgerufen werden, die bereits aus dem Server (120) abgerufen und in der Datensammelvorrichtung (110) gespeichert wurden.
- eine das zu schweißende Objekt individualisierende, mit dem Schweißvorgang verbundene Objekt-Kennung und mindestens eine der Objekt-Kennung entsprechende Information eingerichtet werden, wobei die Objekt-Kennung und die Information auf dem Server gespeichert werden und sie aus dem Server abgerufen und in der Datensammelvorrichtung (110) gespeichert werden können,
die Objekt-Kennung für das zu schweißende Objekt aus einem Strichcode, einer RFID-Kennung oder einer von einem Sensor erzeugten Information mit Hilfe der Datensammelvorrichtung (110) ausgelesen wird,
die Objekt-Kennung und mindestens eine der Kennung entsprechende Information über das Datennetz aus dem Server (120) abgerufen werden und sie im Speicher der Datensammelvorrichtung (110) gespeichert werden oder, alternativ, die Kennung, die der Objekt-Kennung für das zu schweißende Objekt entspricht, die ausgelesen wurde, und mindestens eine der Objekt-Kennung entsprechende Information aus Informationen abgerufen werden, die bereits aus dem Server (120) abgerufen und in der Datensammelvorrichtung (110) gespeichert wurden, und
- eine Schweißanweisungskennung für den Schweißvorgang und mindestens eine der Schweißanweisungskennung entsprechende Information eingerichtet werden, wobei die Schweißanweisungskennung und die Information auf dem Server gespeichert werden und sie aus dem Server abgerufen und in der Datensammelvorrichtung (110) gespeichert werden können,
die Schweißanweisungskennung aus einem Strichcode, einer RFID-Kennung oder einer von einem Sensor erzeugten Information mit Hilfe der Datensammelvorrichtung (110) ausgelesen wird,
die Schweißanweisungskennung und mindestens eine der Schweißanweisungskennung entsprechende Information über das Datennetz aus dem Server (120) abgerufen werden und sie im Speicher der Datensammelvorrichtung (110) gespeichert werden oder, alternativ, die Schweißanweisungskennung, die der Schweißanweisungskennung entspricht, die ausgelesen wurde, und mindestens eine der Schweißanweisungskennung entsprechende Information aus Informationen abgerufen werden, die bereits aus dem Server (120) abgerufen und in der Datensammelvorrichtung (110) gespeichert wurden, und
- die Einhaltung der Schweißanweisung in Bezug auf die Qualifikation des Schweißers überprüft wird, indem die der Schweißer-Kennung entsprechenden Informationen, die Informationen über die vom Schweißer erreichten Qualifikationsgrade umfassen, mit den der Schweißanweisungskennung entsprechenden Informationen, wie Position und Materialdicke, verglichen werden, und
wobei in dem Verfahren die Datensammelvorrichtung (110) während des Schweißvorgangs
- Informationen und/oder Messungen des Schweißvorgangs aus der Schweißvorrichtung (100) sammelt und
- die Informationen und/oder Messungen des Schweißvorgangs, die sie zusammen mit dem dazugehörigen Zeitpunkt des jeweiligen Eintretens gesammelt hat, in ihrem Speicher speichert, und
wobei das Verfahren einen Schritt der Informationskonsolidierung umfasst, in dem die vor dem Starten des Schweißvorgangs abgerufenen Kennungen und die gesammelten und gespeicherten Informationen und/oder Messungen des Schweißvorgangs dergestalt kombiniert werden, dass sie ein den Schweißvorgang individualisierendes Informationspaket bilden, so dass mindestens der Schweißer und die Schweißanweisungen im Schweißvorgang sicher individualisiert sind,
wobei das Verfahren ferner einen Schritt der Dokumentationszusammenstellung umfasst, in dem eine vom Qualitätssystem oder von der Qualitätskontrolle geforderte exakte und zeitnahe Dokumentation gemeinsam mit den in Bezug auf den Schweißvorgang gesammelten Informationen zusammengestellt wird.

2. Verfahren nach Anspruch 1, **dadurch gekennzeichnet, dass** der Schweißvorgang im Schutzgaslichtbogenschweißen die zwischen dem Beginn des Schweißens und dem Ende des Schweißens ausgebildete Schweißnaht umfasst.

3. Verfahren nach Anspruch 1 oder 2, **dadurch gekennzeichnet, dass** das Verfahren einen Schritt umfasst, in dem die Datensammelvorrichtung (110), nach erfolgtem Auslesen und Abrufen der Kennung, die mindestens eine der Kennung entsprechende Information, die ausgelesen wurde, über die Datensammelvorrichtung (110) an den Schweißer zurücksendet, als Hinweis darauf, dass die Kennung und die der Kennung entsprechende Information, die im Server eingerichtet wurden, der Datensammelvorrichtung zur Verfügung stehen.

4. Verfahren nach einem der vorhergehenden Ansprüche, **dadurch gekennzeichnet, dass** die Datensammelvorrichtung (110) den Schritt der Informationskonsolidierung ausführt und das Informationspaket über das Datennetz an den Server (120) sendet.

5. Verfahren nach einem der vorhergehenden Ansprüche, **dadurch gekennzeichnet, dass** das Verfahren außerdem einen Schritt umfasst, in dem
- eine Kennung des im Schweißvorgang zu verwendenden Zusatzmaterials und/oder Schutzgases und mindestens eine der Kennung entsprechende Information eingerichtet werden, wobei die Kennung und die Information auf dem Server gespeichert werden und sie aus dem Server abgerufen und in der Datensammelvorrichtung (110) gespeichert werden können,
- die Kennung des Zusatzmaterials und/oder Schutzgases mit Hilfe der Datensammelvorrichtung (110) ausgelesen wird,
- die Kennung des Zusatzmaterials und/oder Schutzgases und mindestens eine der Kennung des Zusatzmaterials und/oder Schutzgases entsprechende Information über das Datennetz aus dem Server (120) abgerufen werden und sie im Speicher der Datensammelvorrichtung (110) gespeichert werden oder, alternativ, die Kennung des Zusatzmaterials und/oder Schutzgases, die der Kennung des Zusatzmaterials und/oder Schutzgases entspricht, die ausgelesen wurde, und mindestens eine der Kennung des Zusatzmaterials und/oder Schutzgases entsprechende Information aus Informationen abgerufen werden, die bereits aus dem Server (120) abgerufen und in der Datensammelvorrichtung (110) gespeichert wurden,
- die Information über das in der Schweißanweisung vorgegebene Zusatzmaterial und/oder Schutzgas in den der Schweißanweisungskennung entsprechenden Informationen eingerichtet werden,
- die in der Datensammlungsvorrichtung (110) und/oder im Server (120) ausgelesene Kennung des Zusatzmaterials und/oder Schutzgases mit den der Schweißanweisungskennung entsprechenden Informationen verglichen wird, und
- mittels der Datensammelvorrichtung (110) eine Warnung an den Schweißer ausgegeben wird, falls die ausgelesene Kennung des Zusatzmaterials und/oder Schutzgases nicht der in der Schweißanweisungskennung eingerichteten Information bezüglich der Kennung des in der Schweißanweisung vorgegebenen Zusatzmaterials und/oder Schutzgases entspricht.

6. Verfahren nach einem der vorhergehenden Ansprüche, **dadurch gekennzeichnet, dass** die Informationen und/oder Messungen des Schweißvorgangs mindestens eines von Folgendem umfassen: Informationen über das Schweißverfahren, Informationen über den Beginn des Schweißvorgangs, Informationen über das Ende des Schweißvorgangs, den Schutzgasdurchfluss, den Schweißstrom, die Drahtvorschubgeschwindigkeit oder den Strom des Drahtvorschubmotors.

7. Verfahren nach einem der vorhergehenden Ansprüche, **dadurch gekennzeichnet, dass** die der Schweißerkennung entsprechende Information Informationen über die Identität des Schweißers und/oder Schweißerqualifikationsinformationen umfasst.

8. Verfahren nach Anspruch 7, **dadurch gekennzeichnet, dass** die Schweißerqualifikationsinformationen Informationen über mindestens eines von Folgendem umfassen: das Schweißverfahren, die Grundwerkstoffgruppe, die Schweißkategorie, die Form des Produkts, die Schweißposition, die Materialdicke und/oder die Gültigkeitsdauer der Qualifikation.

9. Verfahren nach einem der vorhergehenden Ansprüche, **dadurch gekennzeichnet, dass** der Server (120) und/oder die Datensammelvorrichtung (110) die Information über das Ergebnis aus dem Vergleich der der Schweißer-Kennung entsprechenden Informationen, wie der Qualifikationsinformationen, mit den der Schweißanweisungskennung des Schweißvorgangs entsprechenden Informationen, wie den Qualitätsanforderungen in der Schweißanweisung, an den Schweißer und/oder eine Remote-Einrichtung, wie einen Computer, erzeugt.

10. Verfahren nach einem der vorhergehenden Ansprüche, **dadurch gekennzeichnet, dass** der Server (120) eine Berichtsfunktion umfasst, die dazu eingerichtet ist, Berichte zur Meldung von zu einem Schweißvorgang gehörenden Kennungen und von Informationen, die den Kennungen entsprechend, und/oder von Informationen und/oder Messungen aus dem Schweißvorgang über das Datennetz an die Datensammelvorrichtung (110) und/oder an eine Remote-Einrichtung, wie einen Computer, zu erzeugen.

11. Verfahren nach Anspruch 10, **dadurch gekennzeichnet, dass** die Berichtsfunktion ein Berechnungsmodell zur Steuerung der Schweißproduktion umfasst.

12. Verfahren nach einem der vorhergehenden Ansprüche, **dadurch gekennzeichnet, dass** das Verfahren außerdem einen Schritt umfasst, bei dem in diesem Verfahren, um eine Abweichung im Schweißvorgang zu erkennen, die der Schweißanweisungskennung entsprechenden Informationen aus der Schweißanweisung, die nach dem Schweißvorgang ausgelesen wurden, wie die in der Schweißanweisung festgelegten Grenzwerte für den Strom und/oder die Spannung, mit den aus der Schweißvorrichtung (100) gesammelten Informationen und/oder Messungen des Schweißvorgangs verglichen werden.

13. Verfahren nach Anspruch 12, **dadurch gekennzeichnet, dass** die Abweichung gegenüber den von der Schweißanweisung zugelassenen Werten eine Überschreitung der Schweißspannung und des Schweißstroms ist.

14. Anordnung beim manuellen Schweißen, in welcher der Schweißer mit Hilfe einer Schweißvorrichtung (100) an einem zu schweißenden Objekt (104) einen Schweißvorgang ausführt, wobei die Anordnung umfasst:
eine Schweißvorrichtung (100) und eine Datensammelvorrichtung (110) in Verbindung mit der Schweißvorrichtung (100), wobei die Datensammelvorrichtung (110) zum Abrufen und Senden von Informationen über ein Datennetz mit einem Server (120) verbunden ist, und
wobei die Datensammelvorrichtung (110) ein Display (140), ein Bauteil zum Auslesen von Kennungen (150), einen Prozessor, einen Massenspeicher (160) zum Speichern von Informationen und zum Ablegen der gespeicherten Informationen und ein Datenkommunikationsmittel (170) zur Herstellung einer Verbindung zum Server (120) sowie zur Schweißvorrichtung (100) umfasst,
wobei die Anordnung so ausgelegt ist, dass sie umfasst:
eine den Schweißer individualisierende Schweißer-Kennung und mindestens eine Information, die der Kennung entspricht und Informationen über die vom Schweißer erreichten Qualifikationsgrade umfasst, eine Kennung für das zu schweißende Objekt und mindestens eine Information, die der Kennung für das zu schweißende Objekt entspricht, und eine Schweißanweisungskennung für den Schweißvorgang und mindestens eine der Kennung entsprechende Information aus der Schweißanweisung, wobei die Kennungen und Informationen im Server (120) gespeichert sind, so dass die Kennungen und die Informationen aus dem Server (120) abgerufen und im Speicher der Datensammelvorrichtung (110) gespeichert werden,
wobei die Anordnung außerdem umfasst:
Mittel zum Auslesen von Kennungen aus einem Strichcode, einer RFID-Kennung oder einer von einem Sensor erzeugten Information mit Hilfe der Datensammelvorrichtung (110),
Mittel zum Abrufen von Kennungen und Informationen, die den Kennungen entsprechen, die ausgelesen wurden, aus dem Speicher der Datensammelvorrichtung und/oder aus dem Server (120),
Mittel zum Vergleichen der der Schweißer-Kennung entsprechenden Informationen, die Informationen über die vom Schweißer erreichten Qualifikationsgrade umfassen, mit den der Schweißanweisungskennung entsprechenden Informationen, wie Position und Materialdicke,
wobei die Anordnung außerdem Mittel umfasst, um Informationen und/oder Messungen aus dem Schweißvorgang zu sammeln und die gesammelten Informationen und/oder Messungen im Speicher der Datensammelvorrichtung (110) gemeinsam mit dem Zeitpunkt des Eintretens zu speichern,
Mittel zum Konsolidieren der abgerufenen Kennungen und der gesammelten Informationen und/oder Messungen aus dem Schweißvorgang in der Datensammelvorrichtung (110) zum Ausbilden eines den Schweißvorgang individualisierenden Informationspakets, so dass im Schweißvorgang mindestens der Schweißer und die Schweißanweisungen sicher individualisiert werden, und
Mittel zum Zusammenstellen einer vom Qualitätssystem oder von der Qualitätskontrolle geforderten exakten und zeitnahen Dokumentation gemeinsam mit den in Bezug auf den Schweißvorgang gesammelten Informationen.

## Revendications

1. Procédé dans le soudage manuel dans lequel un soudeur effectue une opération de soudage à l'aide d'un dispositif de soudage (100) sur un objet à souder (104), dans lequel procédé un dispositif de soudage (100) comprenant un dispositif de collecte de données (100) est utilisé, ledit dispositif de collecte de données (110) étant connectable à un serveur (120) par l'intermédiaire d'un réseau informatique pour extraire et envoyer des informations, et ledit dispositif de collecte de données (110) comprend un écran d'affichage (140), un composant pour lecture d'identifications (150), un processeur, une mémoire de masse (160) pour enregistrer des informations et pour stocker les informations enregistrées, et un moyen de communication de données (170) qui établit une connexion au serveur (120) de même qu'au dispositif de soudage (100), ledit procédé comprenant des étapes dans lesquelles, avant le début d'une opération de soudage,
- une identification de soudeur individualisant le soudeur et au moins une information correspondant à l'identification sont aménagées, lesdites identification et information sont enregistrées dans le serveur et elles peuvent être extraites dudit serveur et enregistrées dans le dispositif de collecte de données (110),
l'information correspondant à l'identification de soudeur comprend une information relative aux niveaux de compétence acquis par le soudeur,
l'identification de soudeur est lue dans un code à barres, une radio-identification RFID ou une information produite par un capteur à l'aide du dispositif de collecte de données (110),
l'identification de soudeur et au moins une information correspondant à l'identification de soudeur sont extraites du serveur (120) par l'intermédiaire du réseau informatique et elles sont enregistrées dans la mémoire du dispositif de collecte de données (110), ou, alternativement, l'identification correspondant à l'identification de soudeur, qui a été lue, et au moins une information correspondant à l'identification de soudeur sont extraites d'informations déjà extraites du serveur (120) et enregistrées dans le dispositif de collecte de données (110),
- une identification d'objet individualisant l'objet à souder associée à l'opération de soudage et au moins une information correspondant à l'identification d'objet sont aménagées, ladite identification d'objet et ladite information sont enregistrées dans le serveur, et elles peuvent être extraites dudit serveur et enregistrées dans le dispositif de collecte de données (110),
l'identification d'objet pour l'objet à souder est lue dans un code à barres, une radio-identification RFID ou une information produite par un capteur à l'aide du dispositif de collecte de données (110),
l'identification d'objet et au moins une information correspondant à l'identification sont extraites du serveur (120) par l'intermédiaire du réseau informatique et elles sont enregistrées dans la mémoire du dispositif de collecte de données (110), ou, alternativement, l'identification d'objet correspondant à l'identification pour l'objet à souder, qui a été lue, et au moins une information correspondant à l'identification d'objet sont extraites d'informations déjà extraites du serveur (120) et enregistrées dans le dispositif de collecte de données (110), et
- une identification de consigne de soudage pour l'opération de soudage et au moins une information correspondant à l'identification de consigne de soudage sont aménagées, ladite identification de consigne de soudage et ladite information sont enregistrées dans le serveur et elles peuvent être extraites dudit serveur et enregistrées dans le dispositif de collecte de données (110),
l'identification de consigne de soudage est lue dans un code à barres, une radio-identification RFID ou une information produite par un capteur à l'aide du dispositif de collecte de données (110),
l'identification de consigne de soudage et au moins une information correspondant à l'identification de consigne de soudage sont extraites du serveur (120) par l'intermédiaire du réseau informatique et elles sont enregistrées dans la mémoire du dispositif de collecte de données (110), ou, alternativement, l'identification de consigne de soudage correspondant à l'identification de consigne de soudage, qui a été lue, et au moins une information correspondant à l'identification de consigne de soudage sont extraites d'informations déjà extraites du serveur (120) et enregistrées dans le dispositif de collecte de données (110), et
- le respect de la consigne de soudage en ce qui concerne la compétence du soudeur est vérifié par une comparaison de l'information correspondant à l'identification de soudeur et qui comprend une information relative aux niveaux de compétence acquis par le soudeur, avec l'information correspondant à l'identification de consigne de soudage telle que la position et l'épaisseur du matériau, et
dans ledit procédé, pendant l'opération de soudage, le dispositif de collecte de données (110)
- collecte des informations et/ou mesures de l'opération de soudage en provenance du dispositif de soudage (100), et
- enregistre dans sa mémoire les informations et/ou mesures de l'opération de soudage qu'il a collectées ensemble avec le moment d'occurrence associé à celles-ci, et
ledit procédé comprenant une étape de consolidation d'informations dans laquelle les identifications extraites avant le début de l'opération de soudage et les informations et/ou mesures de l'opération de soudage, qui ont été collectées et enregistrées, sont combinées de manière à constituer un paquet d'informations individualisant l'opération de soudage de telle façon qu'au moins le soudeur et les consignes de soudage soient à coup sûr individualisés dans l'opération de soudage,
ledit procédé comprenant également une étape de constitution de documentation dans laquelle une documentation exacte et actuelle requise par le système de qualité ou le contrôle de qualité est constituée ensemble avec les informations collectées sur l'opération de soudage.

2. Procédé selon la revendication 1, **caractérisé en ce que** l'opération de soudage en soudage à l'arc en atmosphère inerte comprend la soudure formée entre le début de soudage et la fin de soudage.

3. Procédé selon la revendication 1 ou 2, **caractérisé en ce que** le procédé comprend une étape dans laquelle le dispositif de collecte de données (110), après lecture et extraction de l'identification, retourne au soudeur, par l'intermédiaire du dispositif de collecte de données (110), ladite au moins une information correspondant à l'identification, qui a été lue, en tant qu'indication du fait que l'identification et l'information correspondant à l'identification qui ont été aménagées dans le serveur sont disponible au dispositif de collecte de données.

4. Procédé selon l'une des revendications précédentes, **caractérisé en ce que** le dispositif de collecte de données (110) effectue l'étape de consolidation d'informations et envoie le paquet d'informations par l'intermédiaire du réseau informatique au serveur (120).

5. Procédé selon l'une des revendications précédentes, **caractérisé en ce que** le procédé comprend également une étape dans laquelle
- une identification du matériau additif et/ou gaz inerte à utiliser dans l'opération de soudage et au moins une information correspondant à l'identification sont aménagées, lesdites identification et information sont enregistrées dans le serveur, et elles peuvent être extraites dudit serveur et enregistrées dans le dispositif de collecte de données (110),
- l'identification du matériau additif et/ou gaz inerte est lue à l'aide du dispositif de collecte de données (110),
- l'identification du matériau additif et/ou gaz inerte et au moins une information correspondant à l'identification du matériau additif et/ou du gaz inerte sont extraites du serveur (120) par l'intermédiaire du réseau informatique et elles sont enregistrées dans la mémoire du dispositif de collecte de données (110), ou, alternativement, l'identification du matériau additif et/ou gaz inerte correspondant à l'identification du matériau additif et/ou du gaz inerte, qui a été lue, et au moins une information correspondant à l'identification du matériau additif et/ou du gaz inerte sont extraites d'informations déjà extraites du serveur (120) et enregistrées dans le dispositif de collecte de données (110),
- l'information relative au matériau additif et/ou gaz inerte présupposée dans la consigne de soudage est aménagée dans l'information correspondant à l'identification de consigne de soudage,
- l'identification du matériau additif et/ou gaz inerte ayant été lue dans le dispositif de collecte de données (110) et/ou le serveur (120) est comparée avec l'information correspondant à l'identification de consigne de soudage, et
- un avertissement est émis au soudeur au moyen du dispositif de collecte de données (110) si l'identification du matériau additif et/ou gaz inerte ayant été lue ne correspond pas à l'information aménagée dans l'identification de consigne de soudage concernant l'identification du matériau additif et/ou gaz inerte présupposée dans la consigne de soudage.

6. Procédé selon l'une des revendications précédentes, **caractérisé en ce que** les informations et/ou mesures de l'opération de soudage comprennent au moins l'un de ce qui suit : informations sur le processus de soudage, informations sur le début de l'opération de soudage, informations sur la fin de l'opération de soudage, le débit de gaz inerte, le courant de soudage, la vitesse d'avancement de fil ou le courant du moteur d'avancement de fil.

7. Procédé selon l'une des revendications précédentes, **caractérisé en ce que** l'information correspondant à l'identification de soudeur comprend une information sur l'identité du soudeur et/ou l'information de compétence du soudeur.

8. Procédé selon la revendication 7, **caractérisé en ce que** l'information correspondant à l'identification de soudeur comprend des informations sur au moins l'un de ce qui suit : le processus de soudage, le groupe de matériaux de base, la catégorie de soudage, la forme du produit, la position de soudage, l'épaisseur du matériau et/ou la durée de validité de la compétence.

9. Procédé selon l'une des revendications précédentes, **caractérisé en ce que** le serveur (120) et/ou le dispositif de collecte de données (110) produit l'information au soudeur et/ou à un dispositif à distance, tel qu'un ordinateur, sur le résultat de la comparaison de l'information correspondant à l'identification de soudeur, telle que l'information de compétence, avec l'information correspondant à l'identification de consigne de soudage de l'opération de soudage, tels que les exigences de qualité dans la consigne de soudage.

10. Procédé selon l'une des revendications précédentes, **caractérisé en ce que** le serveur (120) comprend une fonction d'établissement de rapports qui est aménagée pour produire, par le biais du réseau informatique, à l'adresse du dispositif de collecte de données (110) et/ou d'un dispositif à distance, tel qu'un ordinateur, des rapports pour signaler des identifications associées à une opération de soudage et des informations correspondant aux identifications et/ou informations et/ou mesures en provenance de l'opération de soudage.

11. Procédé selon la revendication 10, **caractérisé en ce que** la fonction d'établissement de rapports comprend un model de calcul pour la commande de la production de soudage.

12. Procédé selon l'une des revendications précédentes, **caractérisé en ce que** le procédé comprend également une étape dans laquelle, pour le dépistage d'une déviation dans l'opération de soudage, dans ledit procédé, les informations en provenance de la consigne de soudage, qui ont été lues après l'opération de soudage, telles que les valeurs limites pour le courant et/ou la tension définies dans la consigne de soudage, et qui correspondent à l'identification de consigne de soudage, sont comparées avec les informations et/ou mesures de l'opération de soudage collectées en provenance du dispositif de soudage (100).

13. Procédé selon la revendication 12, **caractérisé en ce que** la déviation est un dépassement de la tension de soudage et du courant de soudage par rapport aux valeurs autorisées par la consigne de soudage.

14. Agencement dans le soudage manuel dans lequel le soudeur effectue une opération de soudage à l'aide d'un dispositif de soudage (100) sur un objet à souder (104), ledit agencement comprenant :
un dispositif de soudage (100) et un dispositif de collecte de données (110) en connexion au dispositif de soudage (100), ledit dispositif de collecte de données (110) étant connecté à un serveur (120) par l'intermédiaire d'un réseau informatique pour extraire et envoyer des informations, et
ledit dispositif de collecte de données (110) comprenant un écran d'affichage (140), un composant pour lecture d'identifications (150), un processeur, une mémoire de masse (160) pour enregistrer des informations et stocker les informations enregistrées, et un moyen de communication de données (170) pour établir une connexion au serveur (120) de même qu'au dispositif de soudage (100),
ledit agencement étant configuré pour comprendre :
une identification de soudeur individualisant le soudeur et au moins une information correspondant à l'identification et comprenant une information sur les niveaux de compétence acquis par le soudeur, une identification pour l'objet à souder et au moins une information correspondant à l'identification pour l'objet à souder, et une identification de consigne de soudage pour l'opération de soudage et au moins une information, en provenance de la consigne de soudage, correspondant à l'identification, lesdites identification et information étant enregistrées dans le serveur (120) de telle façon que lesdites identifications et informations soient extraites du serveur (120) et enregistrées dans la mémoire du dispositif de collecte de données (110),
ledit agencement comprenant également :
un moyen pour lire des identifications dans un code à barres, une radio-identification RFID ou une information produite par un capteur à l'aide du dispositif de collecte de données (110),
un moyen pour extraire, de la mémoire du dispositif de collecte de données et/ou du serveur (120), des identifications et des informations qui correspondent aux identifications qui ont été lues,
un moyen pour comparer l'information correspondant à l'identification de soudeur qui comprend des informations relatives aux niveaux de compétence acquis par le soudeur, avec l'information correspondant à l'identification de consigne de soudage, telle que position et épaisseur du matériau,
ledit agencement comprenant également un moyen pour collecter des informations et/ou mesures en provenance de l'opération de soudage et pour enregistrer les informations et/ou mesures collectées dans la mémoire du dispositif de collecte de données (110) ensemble avec le moment d'occurrence,
un moyen pour consolider, dans le dispositif de collecte de données (110), les identifications extraites et les informations et/ou mesures collectées en provenance de l'opération de soudage pour constituer un paquet d'informations individualisant l'opération de soudage de telle façon qu'au moins le soudeur et les consignes de soudage soient à coup sûr individualisés dans l'opération de soudage, et
un moyen pour constituer une documentation exacte et actuelle requise par le système de qualité ou le contrôle de qualité ensemble avec les informations collectées sur l'opération de soudage.
